# EUROPEAN PATENT SPECIFICATION

(11) **EP 2 645 798 B1**
(45) Date of publication and mention of the grant of the patent: **31.08.2022**
(21) Application number: 12161933.2
(22) Date of filing: 28.03.2012
(51) Int. Cl.: H04W 72/10

(54) **Scheduling method in a mobile telecommunication system**
Planungsverfahren in einem mobilen Telekommunikationssystem
Procédé de planifications dans un système de télécommunications mobile

(43) Date of publication of application: 02.10.2013
(60) Divisional application: 14164243.9
(73) Proprietor: Telefónica Germany GmbH & Co. OHG, 80992 München (DE)
(72) Inventor: Müllner, Robert, 81479 München (DE)
(74) Representative: Herrmann, Uwe

(56) References cited:
- EP-A1- 1 771 023
- EP-A2- 2 190 249
- US-A1- 2008 215 409
- US-A1- 2008 279 139
- 3GPP: "3rd Generation Partnership Project; Technical Specification Group Services and System Aspects; Policy and charging control architecture (Release 11)", 3GPP DRAFT; 23203-B40_CRS_IMPLEMENTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 1 December 2011 (2011-12-01), XP050575094, [retrieved on 2011-12-01]

## Description

Legislatory requirements require mobile network operators to prioritise calls made by certain privileged users such as police, emergency services and others. The aim is to enable these privileged users to perform their duties and services even in case of a severe emergency, disaster or war by giving these privileged users preferential access to the mobile network resources. In case of severe emergency disaster or war, the mobile network may be overloaded, and ordinary users may not be able to successfully establish calls due to radio access network congestion.

For fulfilling these requirements for circuit switched (CS) speech services, government bodies and authorities use enhanced Multi-Level Precedence and Pre-emption (eMLPP) for preferred access rights in congested networks during emergency situations. These access classes are standardised for CS services and pre-emption is applied for CS speech and CS data services. As most of the data traffic in mobile networks is packet switched (PS) traffic, prioritisation in terms of access rights is desired also for packet data services. Moreover, privileged users want to use enhanced calling features, such as video calls or exchange multimedia information.

The aim of this invention is to provide options for handling privileged treatment of specific user groups in the packet switched domain.

Different prioritisation schemes are applied in communication networks based on differentiation between user groups, service types or capabilities of the equipment. In the 3rd Generation Partnership Project (3GPP) standard, eMLPP was introduced for CS services to assign preferred access rights to specific users. Different access classes are administered in the Home Location Register (HLR). At call setup the access class of the user is conveyed from the core network to the radio network. High priority users have pre-emptive access rights over standard users and in case of congestion, a connection of a standard user might be terminated to provide resources for allocating the call of a privileged user. This functionality is standardised and restricted to CS speech and CS data services.

CS data services are rarely used in mobile networks due to their bursty nature and non economic allocation of physical resources. PS data services are widespread in use in mobile networks in the General Packet Radio Service (GPRS), Enhanced GPRS (E-GPRS), Universal Mobile Telecommunications System (UMTS] and High Speed Packet Access (HSPA). Moreover, the 3GPP standard for Long Term Evolution (LTE) is explicitly based on PS services for speech and data.

US2008/279139 A1 describes a method for managing radio resources in a UMTS network when several services are handled simultaneously. 3GPP QoS parameters including the ARP parameter are used for decisions on resource distribution which also covers pre-emption steps for congestion situations.

EP 1 771 023 A1 teaches a method that takes into account the value of the QoS parameter ARP for distribution of air interface resources assigned by the scheduler to several allocated users. The scheduling weight for existing services of lower priority is reduced such that this capacity can be assigned to a new incoming service request of a high priority user.

EP 2 190 249 A2 describes a method for combining 3GPP QoS parameters with the information about the identity of the mobile network operator. This combination allows a fair distribution of the resources when several operators share one radio access network using different QoS mappings.

US 2008/215409 A1 discloses a scheduling algorithm for distributing especially human resources to different tasks. Input to scheduling decisions are not defined by 3GPP QoS parameters but retrieved from hard and soft constraints.

It is the object of the present invention to enable a privileged treatment of packet switched data service for a particular group of users.

This object is solved by the subject matter of the independent claims.

Preferred embodiments are defined by the dependent claims.

According to a first embodiment of the present application, a method for scheduling radio resources for packet switched (PS) services among a plurality of users in a mobile communication system, is provided according to claim 1.

According to a further aspect of the present invention, a mobile communication system is provided according to claim 14.

Allocation/Retention Priority (ARP) information is used in combination with pre-emption for resource allocation of privileged users in the PS domain of mobile networks.

CS user specific attributes are used in combination with PS service specific attributes to define access rights and scheduling priority for PS services in combination with a pre-emption strategy.

A combination of service related and user related QoS attributes are used for defining a scheduling priority. User specific parameters have higher priority than service specific QoS parameters, i.e. a low priority service performed by a high priority user obtains higher scheduling priority than a high priority service of a low priority user.

PS and CS service and user specific parameters are used in combination with a threshold based procedure to switch between soft and hard pre-emption for the allocation of high priority data users in a congested mobile network cell.

PS and CS service and user specific parameters are used in combination with a threshold based procedure to automatically detect severe emergency situation.

PS and CS service and user specific parameters are used in combination with interference reduction features to increase the quality of data services for privileged data service users especially at an edge of a cell.

PS and CS service and user specific parameters are used for admission control, downstream pre-emption and scheduling priority on the air interface and terrestrial interfaces.

PS and CS service and user specific parameters are used for decisions on pre-empting CS services of low priority users.

Network-controlled and/or user-controlled ARP for PS resource assignment and scheduling priorities are used in combination with pre-emption and downgrading of services of users of lower priority.

### Detailed description of the invention

In the following, the term "user" refers -but is not limited to - a user using a user equipment and identified by an identity module, such as an SIM or UICC. Moreover, the term "privileged" or "priority user" refers to a user identified by an identity module that is provisioned (e.g. in an HLR) as belonging to the group of privileged users (such as police or emergency services). Likewise, the term "standard user" refers to a user identified by an identity module that is provisioned as belonging to the group of standard users such as regular subscribers of a public land mobile network (PLMN).

In the PS domain Quality of Service (QoS) attributes are introduced to differentiate services according to their requirements. The associated QoS profile is conveyed from the mobile terminal to the Serving GPRS Support Node (SGSN) and its assignment is negotiated. Examples for service related QoS attributes are Traffic Class (TC) and Traffic Handling Priority (THP) for interactive services. The user related QoS attribute Allocation/Retention Priority (ARP) is administered in the HLR. The Radio Access Bearer (RAB) assignment request sent in third generation (3G) networks from the SGSN to the RNC includes one of the three values specified for ARP value, which is mapped on one of the 15 priority levels used by the Radio Network Controller (RNC) for packet scheduling over the air interface. A similar procedure is applied by the Packet Control Unit (PCU) in Second Generation (2G) networks.

Prioritisation of users based on the capabilities of their terminals can be used e.g. to prioritise multi Radio Access Technology (RAT) terminal users in a given RAT.

The invention is explicated by means of the following figures:

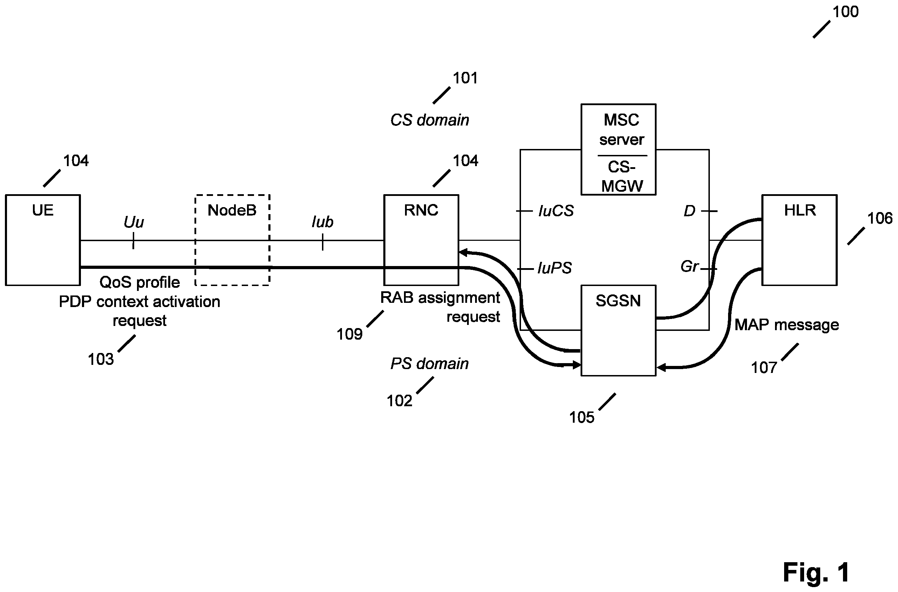

Figure 1 shows a part of the 3G network architecture (100) and its differentiation between the PS (102) and CS (101) domain. For consideration of QoS attributes for resource assignment service related parameters are sent in the PDP context activation request (103) from the User Equipment (UE) (104) to the SGSN (105). The user specific parameter ARP is transferred from the HLR (106) to the SGSN via a MAP message (107). The SGSN informs the RNC (108) about the QoS parameters in the RAB assignment request (109).

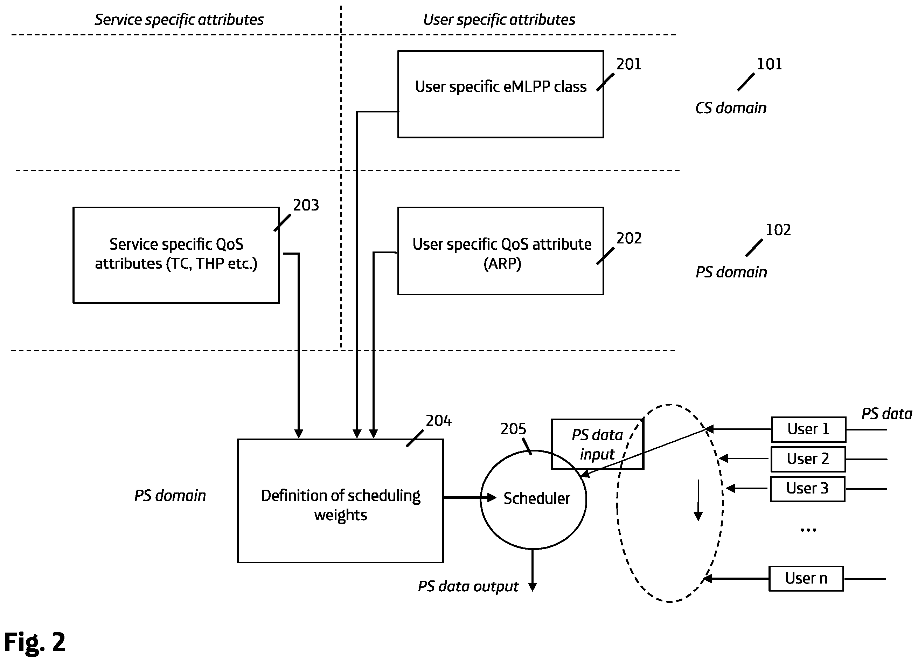

Figure 2 shows how service specific QoS attributes (203) and user specific attributes (201, 202) from PS (102) and CS (101) domain are used to define the scheduling weight (204) in the PS domain. The scheduling weight for each user is used by the scheduler (205) to decide how often a particular user is scheduled or how long a particular user receives service in the PS domain.

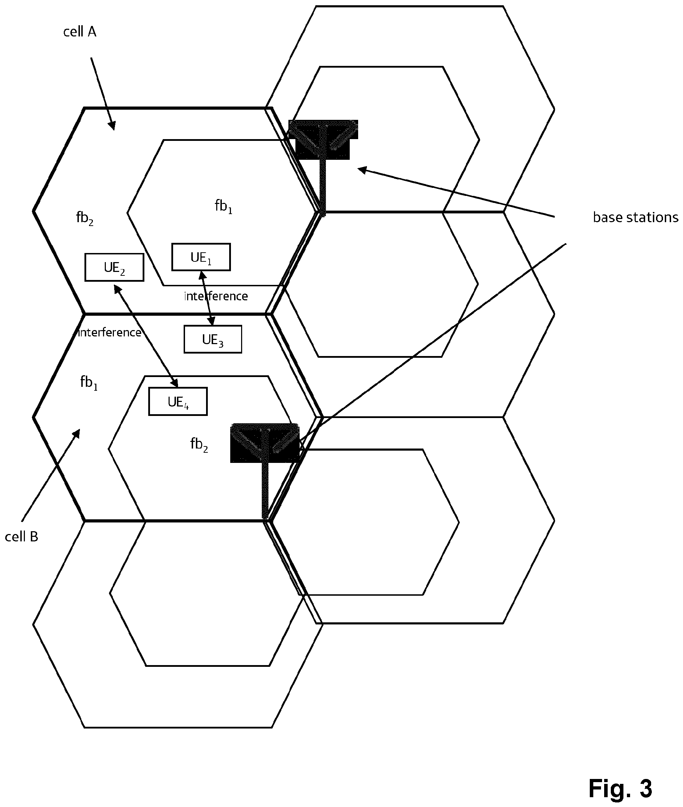

Figure 3 shows a standard ICIC configuration. The frequency range of each cell (cell A, cell B) is sub-divided into two frequency bands (fb1 and fb2). In cell A, fb1 is assigned to UEs in the vicinity of the base station, while fb2 is assigned to UEs at the cell border. In the neighbouring cell B, fb1 is used by UEs at the cell border, while fb2 is assigned to UEs in the inner area of the cell. Thus direct interference between mobiles at the cell border of cell A and cell B is avoided. Nevertheless, interference between UEs in the inner area of cell A (UE1) and the outer area of cell B (UE3) exists.

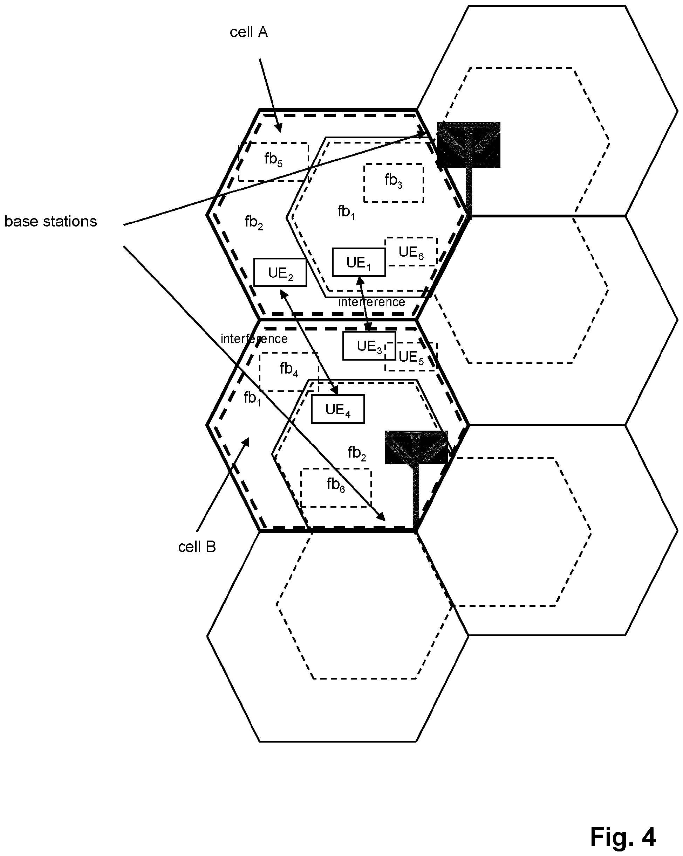

Figure 4 shows the frequency band separation according to an aspect of the present invention. In particular, in cell A, fb1 and fb3 are assigned to UEs in the inner area, where fb1 is used by standard UEs and fb3 is used by UEs of prioritised users. The outer area of cell A uses frequency bands fb2 for standard UEs and fb5 for priority users. In cell B, fb2 in the inner area is assigned to standard users and fb6 to high priority users (dashed line). In the outer area of cell B, fb1 is assigned to standard users and fb4 to high priority users. Thus interference between standard users (UE1 and UE3) still exists, but not between the privileged users with UEs 5 and 6 (dashed lines) using the frequency bands fb4 (UE5) and fb3 (UE6).

The range of the sub-bands fb1 to fbn shall be adapted dynamically based on the number of high priority users. In case of serving only few high priority users, fb1 in the inner area of cell A shall be larger than fb3. As the number of high priority users increases, frequencies from fb1 shall be transferred to fb3. As a consequence of lower interference, higher modulation and coding schemes can be used and the retransmission rate can be lowered. Both aspects contribute to an increase of throughput of a packet switched data service.

### Privileged treatment of packet data service users based on QoS attributes

In 3G networks the QoS profile including QoS attributes such as TC and THP is sent in the Packet Data Protocol (PDP) context activation request from the UE to the SGSN. The subsequent step includes communication between SGSN and HLR to verify whether the QoS requirements requested by the UE are permitted. The ARP is a subscription parameter administered in the HLR and is sent via a Mobile Application Part (MAP) message from the HLR to the SGSN. The QoS requirements including TC, THP and ARP are finally transferred from the SGSN to the RNC in the RAB assignment request as shown in Figure 1.

According to the current state of technology, these parameters are combined via weighting factors and mapped on a single value that defines the weight of a user specific data stream. In a multi-user system the scheduler decides in which sequence data from different users are transmitted over the air interface (Uu). An important aspect is the frequency for scheduling data of a specific user compared to other users. This scheduling policy allows prioritising data of specific services and/or users according to their QoS requirements by using polling models. In these polling models typically a single server visits a number of queues in a predefined order. After visiting a particular queue, other queues are served according to a scheduling strategy: A model characterises The visiting order of the server to the queues and the strategy being used to decide how long a specific queue is visited to transmit data before the server leaves.

According to an aspect of the invention the QoS attribute ARP shall be used for admission control, pre-emption and scheduling priority.

### Admission control and pre-emption

Admission shall be granted to users of high priority. In case of congestion, PS services of users with lower ARP shall be pre-empted and service requests of low priority users, i.e. users with higher ARP shall be rejected.

There are two operating modes for pre-emption:
In soft pre-emption existing PS services of standard users shall be maintained but their scheduling weight shall be reduced to allocate new service requests of high priority users on the free resources, i.e. the PS service of a standard user is downgraded.

Hard pre-emption is a mechanism to terminate existing services of standard users to immediately provide physical resources for high priority users.

A threshold is introduced to decide on switching between soft and hard pre-emption. If the number of assigned resources for high priority users is below this threshold and high priority users are served according to their QoS requirements, soft pre-emption shall be applied. If the number of assigned resources for high priority users exceeds this threshold or the QoS requirements of high-priority users are not fulfilled, hard pre-emption is activated and existing PS services will be terminated. A hysteresis shall be introduced to reduce the number of switches between soft and hard pre-emption.

In all these procedures the priority of the user shall be based on the value of the ARP.

### Scheduling priority

The QoS priorities of high priority users shall be analysed. If necessary, services of users of lower priority shall be downgraded to provide sufficient resources for fulfilling the QoS requirements of high priority users, e.g. the guaranteed bit rate for real-time services (TC = 1 and TC =2). For this purpose the attribute ARP shall obtain a sufficiently high weight in the mapping of service-related QoS attributes (TC, THP etc.) and user-related QoS attribute ARP on the overall scheduling weight. For fulfilling QoS requirements of high priority users, the weight of the user specific QoS parameter (ARP) shall dynamically be increased and the weight of service specific QoS parameters (e.g. TC and THP) shall be decreased such that highest priority for scheduling decisions is assigned to the user group.

The overall scheduling weight of a service shall be defined by mapping each used QoS parameter on a scale from 0 to 1, to so-called Assigned QoS Values, and multiplying service specific Assigned QoS Values with a weighting factor for service specific QoS attributes. User specific Assigned QoS Values shall be multiplied with a weighting factor for user specific QoS attributes.

The resulting value shall be scaled on a value between 0 and 1 by division by the number of used QoS attributes. The sum of both weighting factors, user specific and service specific, shall be 1.

For 2G systems the same QoS attributes are used and the value of the ARP shall be used by the Packet Control Unit (PCU) to assign higher priority to privileged data service users in terms of access rights and scheduling priority. In LTE prioritisation of users based on the ARP attribute shall be applied by the evolved NodeB (eNodeB).

### Privileged treatment of packet data service users based on eMLPP levels

The eMLPP priority class administered in the HLR and according to the current state of technology only used for CS services, shall be conveyed to the PCU (2G), RNC (3G) or eNodeB (LTE). The eMLPP class shall be used to define the user specific part for the definition of the scheduling weight. The scheduling weight shall be calculated by a combination of user and service specific attributes as described in 6.3.2.1.2. The important aspect is that not only PS based attributes are used, but also CS attributes. This combination of PS and CS domain is shown in Figure 2. The calculated relative scheduling weight for each served user shall be used by the scheduler to decide how long a particular user receives service.

Admission control, preemption and scheduling of users of lower priority shall be performed as described in the previous sections. The difference is the use of eMLPP classes from the CS domain for defining the user priority. The advantage of this solution is that only one data base has to be administered, i.e. the eMLPP class definition in the CS domain. Consistency between CS and PS data in the HLR is not required. This aspect reduces the effort for handling privileged treatment of specific user groups. A further advantage is that the three classes defined for ARP in 3GPP TS 23.107 can be used for differentiation of users independent of government bodies and authorities, the latter group is administered via the eMLPP classes.

User specific information of the CS domain shall be sent from the HLR (via the SGSN) to the RNC and shall be used for scheduling decisions by transferring user-specific eMLPP classes to the SGSN and RNC and used for PS service assignment.

### Automatic detection of severe emergency situations

For governmental bodies and authorities it is essential that preferred access rights are assigned automatically without operator intervention. The priority classes are configured fixed, i.e. a prioritised user obtains permanently preferred access rights. This is not desired if the user uses the mobile phone in non-emergency situations. To differentiate between emergency and non-emergency situations, a threshold shall be introduced to switch between soft and hard pre-emption. If the number of priority users in a cell is below this threshold, soft pre-emption shall be applied, i.e. the priority user obtains access to the packet data network, but serving of standard users is also permitted. If the number of priority users in the cells exceeds this threshold, hard pre-emption shall be applied to keep the resources free for priority users.

### Coordination with interference reduction features

To increase the throughput for priority users, Inter Cell Interference Coordination (ICIC) technologies as used in LTE shall be applied in combination with user specific QoS attributes. In ICIC the frequency spectrum is separated and it is avoided that cell edge users in one cell use the same frequencies as cell edge users of the neighbouring cell. This procedure reduces interference which is important in frequency re-use 1 networks, which is the typical deployment scenario for LTE networks.

Prioritised users shall be allocated in specific frequency groups to avoid throughput reduction from interference. A specific frequency spectrum shall be assigned to priority users irrespectively of their location at the cell border or in the vicinity of the base station. Thresholds shall be used to decide how many frequencies are assigned to this specific group, depending on the number of priority users in the cell.

### Network technologies

The procedures described in the preceding sections can be applied in 2G, 3G and LTE networks. Furthermore in LTE networks, priority handling shall also be used for speech services, which is performed in LTE in the PS domain.

### Application on air interface and interfaces between network entities

The described procedure shall be applied on the air interface but also on the terrestrial interface between different network nodes.

### Pre-emption of speech services for allocation of services of privileged data users

If sufficient resources are not available to serve privileged packet data users, not only PS services of standard users shall be downgraded or pre-empted, but also CS services shall be terminated to save resources.

## Claims

1. A method for scheduling radio resources for packet switched, PS, services among a plurality of users in a mobile communication system comprising a scheduler, wherein the method comprising the steps of:
a) determining user and/or service attributes comprising Allocation/Retention Priority, ARP; and
b) taking a scheduling decision on basis of these determined attributes, by using scheduling weight (204) for each user equipment, UE, in PS domain,
which is defined by service specific QoS attributes (203) and user specific attributes (201, 202) from PS and circuit switched, CS, domain to decide how often a particular user equipments, UE, is scheduled or how long a particular user equipments, UE, receives servce in the PS domain,
wherein the steps a) and b) are performed by the scheduler,
wherein Inter-Cell Interference Coordination, ICIC, is used in the mobile communication system and each cell (A, B) is sub-divided into frequency bands (fb1, fb2, fb3, fb4, fb5, fb6) and different frequency bands (fb1, fb2, fb3, fb4, fb5, fb6) are assigned to user equipments, UE, located at an inner area of the cell and user equipments, UE, located at an outer area of the cell (A, B), the method further comprises assigning frequency bands (fb1, fb2, fb3 fb4, fb5, fb6) to the user equipments, UE,
wherein in a first cell (A), a first frequency band (fb1) and a third frequency band (fb3) are assigned to user equipments, UE, in an inner area of the first cell (A), wherein the first frequency band (fb1) is assigned to standard user equipments having a higher ARP value representing a lower priority, and the third frequency (fb3) is assigned to prioritised user equipments having a lower ARP value representing a higher priority, wherein in an outer area of the first cell (A), a second frequency band (fb2) is assigned to standard user equipments and a fifth frequency band (fb5) is assigned to prioritised user equipments, wherein in a second cell (B), the second frequency band (fb2) in an inner area of the second cell (B) is assigned to standard user equipments and a sixth frequency band (fb6) in the inner area of the second cell (B) is assigned to prioritised user equipments, and wherein in an outer area of the second cell (B), the first frequency band (fb1) is assigned to standard user equipments and a fourth frequency band (fb4) is assigned to prioritised user equipments.

2. The method according to claim 1 wherein the range of the frequency bands (fb1, fb2, fb3, fb4, fb5, fb6) is adapted dynamically based on the number of prioritised user equipments.

3. The method according to one of claims 1 and 2, wherein as the number of prioritised user equipments increases frequencies from the first frequency band (fb1) are transferred to the fourth frequency band (fb4).

4. The method of claim 1 wherein the scheduling decision comprises preempting a prioritised user equipments having a lower ARP value than an ARP value of a standard user equipment,UE.

5. The method of claim 1, wherein the scheduling decision comprises rejecting a service request of a standard user equipment with higher ARP value than the ARP value of a prioritised user equipment.

6. The method of claim 4, wherein preempting includes reducing the scheduling weight of the standard user equipment, UE.

7. The method of claim 4, wherein preempting includes reducing the scheduling weight of the standard user equipment if the prioritised user equipment, UE, is served according to its Quality of Service, QoS, requirement.

8. The method of claim 4, wherein preempting includes terminating an existing packet switched service of the standard user equipment, UE.

9. The method of claim 8, wherein preempting includes terminating an existing packet switched service of the standard user equipment, UE, if the prioritised user equipment, UE, is not served according to its quality of service requirement or a predetermined threshold relating to a number of priority users in a given network cell is exceeded.

10. The method of claim 6 wherein a threshold is used to determining whether the scheduling weight of the standard user equipment, UE, is reduced or an existing packet switched service is terminated.

11. The method of one of claims 1 to 10 wherein a threshold and hysteresis is used to decide on switching between soft and hard pre-emption wherein soft pre-empting includes reducing the scheduling weight of a standard user equipment ,UE, and hard pre-empting includes terminating an existing packet switched service of a standard user equipment, UE.

12. The method of one of claims 1 to 11, wherein the user specific attributes further comprise an eMLPP priority class, the eMLPP priority class and the ARP being multiplied with weighting factors and wherein the service attributes include TC or THP, the TC or THP being multiplied with a weighting factor.

13. The method of claim 12 wherein each weighting factor ranges between 0 and 1 and the sum of all weighting factors equals to 1.

14. A mobile communication system comprising a plurality of User Equipments, UEs, and a scheduler (205), adapted to perform the method of one of claims 1 to 13, wherein the scheduler comprises one of a Radio Network Controller, RNC, Packet Control Unit, PCU, or an evolved NodeB, eNodeB.

## Patentansprüche

1. Verfahren zum Scheduling von Funkressourcen für paketvermittelte, PS-, Dienste bei mehreren Nutzern in einem einen Scheduler umfassenden mobilen Kommunikationssystem, wobei das Verfahren die Schritte umfasst:
a) Ermitteln von Zuweisungs-/Speicher-Priorität (Allocation/Retention Priority), ARP, enthaltenden Nutzer- und/oder Dienstattributen und
b) Fällen einer Scheduling-Entscheidung aufgrund dieser ermittelten Attribute mittels des Scheduling-Gewichts (204) für jedes bediente Endgerät, UE, in der PS-Domäne,
was durch dienstspezifische Dienstqualität-Attribute (QoS-Attribute) (203) und nutzerspezifische Attribute /201, 202) aus der PS- und leitungsvermittelten, CS-, Domäne definiert wird, um zu entscheiden, wie oft ein bestimmtes Endgerät, UE, eingeplant wird oder wie lange ein bestimmtes Endgerät Dienste in der PS-Domäne empfängt, wobei die Schritte a) and b) durch den Scheduler ausgeführt werden,
wobei in dem mobilen Kommunikationssystem Interferenzkoordination zwischen Zellen, (Inter-Cell Interference Coordination), ICIC, eingesetzt wird und jede Zelle (A, B) in Frequenzbänder (fb1, fb2, fb3, fb4, fb5, fb6) unterteilt wird und den an dem Innenbereich der Zelle befindlichen Endgeräten, UE, und den an dem Außenbereich der Zelle (A, B. befindlichen Endgeräten, UE, unterschiedliche Frequenzbänder (fb1, fb2, fb3, fb4, fb5, fb6) zugewiesen werden,
wobei das Verfahren ferner das Zuweisen von Frequenzbändern (fb1, fb2, fb3, fb4, fb5, fb6) an die Endgeräte, UE, umfasst,
wobei eine erste Zelle (A), ein erster Frequenzband (fb1) und ein dritter Frequenzband (fb3) den Endgeräten, UE, in einem Innenbereich der ersten Zelle (A) zugewiesen werden, wobei der erste Frequenzband (fb1) Standardendgeräten mit einem höheren eine niedrigere Priorität darstellenden ARP-Wert zugewiesen wird und die dritte Frequenz (fb3) priorisierten Endgeräten mit einem niedrigeren eine höhere Priorität darstellenden ARP-Wert zugewiesen wird, wobei in einem Außenbereich der ersten Zelle (A) ein zweiter Frequenzband (fb2) den Standardendgeräten zugewiesen wird und ein fünfter Frequenzban (fb5) priorisierten Endgeräten zugewiesen wird, wobei in einer zweiten Zelle (B) der zweite Frequenzband (fb2) in einem Innenbereich der zweiten Zelle (B) Standardendgeräten zugewiesen wird und ein sechster Frequenzband (fb6) im Innenbereich der zweiten Zelle priorisierten Endgeräten zugewiesen wird, und wobei in einem Außenbereich der zweiten Zelle (B) der erste Frequenzband (fb1) den Standardendgeräten zugewiesen wird und ein vierter Frequenzban( fb4) priorisierten Endgeräten zugewiesen wird.

2. Verfahren nach Anspruch 1, wobei der Bereich der Frequenzbänder (fb1, fb2, fb3, fb4, fb5, fb6) auf der Basis der Anzahl der priorisierten Endgeräte dynamisch angepasst wird.

3. Verfahren nach einem der Anspräche 1 oder 2, wobei bei zunehmender Anzahl der priorisierten Endgeräte Frequenzen aus dem ersten Frequenzband (fb1) an den vierten Frequenzband (fb4) übertragen werden.

4. Verfahren nach Anspruch 1, wobei die Scheduling-Entscheidung eine Bevorrechtigung von priorisierten Endgeräten mit einem niedrigeren ARP-Wert als ein APR-Wert eines Standardendgeräts, UE, umfasst.

5. Verfahren nach Anspruch 1, wobei die Scheduling-Entscheidung eine Ablehnung einer Dienstanfrage eines Standardendgeräts mit einem höheren Wert als der ARP-Wert eines priorisierten Endgeräts umfasst.

6. Verfahren nach Anspruch 4, wobei die Bevorrechtigung die Reduzierung des Scheduling-Gewichts des Standardendgeräts, UE, umfasst.

7. Verfahren nach Anspruch 4, wobei die Bevorrechtigung die Verringerung des Scheduling-Gewichts des Standardendgeräts umfasst, wenn das priorisierte Endgerät, UE, gemäß seiner Dienstqualitätsanforderung, QoS-Anforderung, bedient wird.

8. Verfahren nach Anspruch 4, wobei die Bevorrechtigung das Beenden eines vorhandenen paketvermittelten Dienstes des Standardendgeräts, UE, einschließt.

9. Verfahren nach Anspruch 8, wobei die Bevorrechtigung das Beenden eines vorhandenen paketvermittelten Dienstes des Standardendgeräts, UE, einschließt, wenn das priorisierte Endgerät, UE, nicht gemäß seiner Dienstqualitätsanforderung bedient wird oder ein vorbestimmter die Anzahl der in einer gegebenen Netzzelle vorhandenen Prioritätsnutzer betreffender Schwellenwert überstiegen wird.

10. Verfahren nach Anspruch 6, wobei ein Schwellenwert zum Bestimmen, ob das Scheduling-Gewicht des Standardendgeräts, UE, verringert oder ein bestehender paketvermittelter Dienst beendet wird, eingesetzt wird.

11. Verfahren nach einem der Ansprüche 1 bis 10, wobei ein Schwellenwert und eine Hysterese eingesetzt wird, um über einen Wechsel zwischen weicher und harter Bevorrechtigung zu entscheiden, wobei die weiche Bevorrechtigung die Verringerung des Scheduling-Gewichts eines Standardendgeräts, UE, und die harte Bevorrechtigung das Beenden eines vorhandenen paketvermittelten Dienstes eines Standardendgeräts, UE, einschließt.

12. Verfahren nach einem der Ansprüche 1 bis 11, wobei die nutzerspezifischen Attribute ferner eine Rangordnungs- und Bevorrechtigungsprioritätsklasse (Enhanced Multi-Level Precedence and Pre-emption Classes, (eMLPP), umfasst wobei die eMLPP-Prioritätsklasse und die ARP mit Gewichtungsfaktoren multipliziert werden und wobei die Dienstattribute TC bzw. THP umfassen, wobei TC bzw. THP mit einem Gewichtungsfaktor multipliziert wird.

13. Verfahren nach Anspruch 12, wobei jeder Gewichtungsfaktor von 0 bis 1 reicht und die Summe aller Gewichtungsfaktoren gleich 1 ist.

14. Mobiles Kommunikationssystem mit einer Vielzahl an Endgeräten, UE, und einem Scheduler umfasst, der ausgelegt ist, um das Verfahren nach einem der Ansprüche 1 bis 13 auszuführen, wobei der Scheduler entweder einen Funknetz-Controller, RNC, eine Paketsteuereinheit, PCU, oder einen Evolved NodeB, eNodeB, umfasst.

## Revendications

1. Procédé de planification de ressources radio pour des services à commutation de paquets, PS (Packet Switched), parmi une pluralité d'utilisateurs dans un système de communication mobile comprenant un planificateur, le procédé comprenant les étapes consistant à :
a) déterminer des attributs d'utilisateur et/ou de service comprenant une priorité d'allocation-rétention, ARP (Allocation/Retention Priority) ; et
b) prendre une décision de planification sur la base de ces attributs déterminés, en utilisant le poids de planification (204) pour chaque équipement utilisateur, UE (User Equipment), dans le domaine PS,
qui est défini par des attributs QoS spécifiques du service (203) et des attributs spécifiques de l'utilisateur (201, 202) du domaine PS et à commutation de circuits, CS (Circuit Switched), pour décider à quelle fréquence un équipement utilisateur, UE, particulier est planifié ou pendant combien de temps un équipement utilisateur, UE, particulier reçoit un service dans le domaine PS, les étapes a) et b) étant exécutées par le planificateur,
une coordination des interférences intercellulaires, ICIC (Inter-Cell Interference Coordination), étant utilisée dans le système de communication mobile et chaque cellule (A, B) étant subdivisée en bandes de fréquence (fb1, fb2, fb3, fb4, fb5, fb6) et différentes bandes de fréquence (fb1, fb2, fb3, fb4, fb5, fb6) étant attribuées à des équipements utilisateurs, UE, situés sur une zone intérieure de la cellule et des équipements utilisateurs, UE, situés sur une zone extérieure de la cellule (A, B),
le procédé comprenant en outre l'attribution de bandes de fréquence (fb1, fb2, fb3, fb4, fb5, fb6) aux équipements utilisateurs, UE, une première bande de fréquence (fb1) et une troisième bande de fréquence (fb3) étant, dans une première cellule (A), attribuées à des équipements utilisateurs, UE, dans une zone intérieure de la première cellule (A), la première bande de fréquence (fb1) étant attribuée à des équipements utilisateurs standard présentant une valeur d'ARP supérieure représentant une priorité inférieure, et la troisième fréquence (fb3) étant attribuée à des équipements utilisateurs auxquels est donnée la priorité présentant une valeur d'ARP inférieure représentant une priorité supérieure, une deuxième bande de fréquence (fb2) étant, dans une zone extérieure de la première cellule (A), attribuée à des équipements utilisateurs standard et une cinquième bande de fréquence (fb5) étant attribuée à des équipements utilisateurs auxquels est donnée la priorité, la deuxième bande de fréquence (fb2) dans une zone intérieure de la seconde cellule (B) étant, dans une seconde cellule (B), attribuée à des équipements utilisateurs standard et une sixième bande de fréquence (fb6) dans la zone intérieure de la seconde cellule (B) étant attribuée à des équipements utilisateurs auxquels est donnée la priorité, et, dans une zone extérieure de la seconde cellule (B), la première bande de fréquence (fb1) étant attribuée à des équipements utilisateurs standard et une quatrième bande de fréquence (fb4) étant attribuée à des équipements utilisateurs auxquels est donnée la priorité.

2. Procédé selon la revendication 1, dans lequel la plage des bandes de fréquence (fb1, fb2, fb3, fb4, fb5, fb6) est adaptée de manière dynamique en fonction du nombre d'équipements utilisateurs auxquels est donnée la priorité.

3. Procédé selon l'une des revendications 1 et 2, dans lequel des fréquences de la première bande de fréquence (fb1) sont transférées à la quatrième bande de fréquence (fb4) au fur et à mesure que le nombre d'équipements utilisateurs auxquels est donnée la priorité augmente.

4. Procédé selon la revendication 1, dans lequel la décision de planification comprend la préemption d'un équipement utilisateur auquel est donnée la priorité présentant une valeur d'ARP inférieure à une valeur d'ARP d'un équipement utilisateur, UE, standard.

5. Procédé selon la revendication 1, dans lequel la décision de planification comprend le rejet d'une requête de service d'un équipement utilisateur standard avec une valeur d'ARP supérieure à la valeur d'ARP d'un équipement utilisateur auquel est donnée la priorité.

6. Procédé selon la revendication 4, dans lequel la préemption comporte la réduction du poids de planification de l'équipement utilisateur, UE, standard.

7. Procédé selon la revendication 4, dans lequel la préemption comporte la réduction du poids de planification de l'équipement utilisateur standard si l'équipement utilisateur, UE, auquel est donnée la priorité, est servi selon son exigence de qualité de service, QoS (Quality of Service).

8. Procédé selon la revendication 4, dans lequel la préemption comporte l'arrêt d'un service à commutation de paquets existant de l'équipement utilisateur, UE, standard.

9. Procédé selon la revendication 8, dans lequel la préemption comporte l'arrêt d'un service à commutation de paquets existant de l'équipement utilisateur, UE, standard, si l'équipement utilisateur, UE, auquel est donnée la priorité n'est pas servi selon son exigence de qualité de service ou qu'un seuil prédéfini relatif à un nombre d'utilisateurs prioritaires dans une cellule de réseau donnée est dépassé.

10. Procédé selon la revendication 6, dans lequel un seuil est utilisé pour déterminer si le poids de planification de l'équipement utilisateur, UE, standard est réduit ou qu'un service à commutation de paquets existant est arrêté.

11. Procédé selon l'une des revendications 1 à 10, dans lequel un seuil et une hystérésis sont utilisés pour prendre une décision concernant la commutation entre une préemption douce et une préemption dure, la préemption douce comportant la réduction du poids de planification d'un équipement utilisateur, UE, standard et la préemption dure comportant l'arrêt d'un service à commutation de paquets existant d'un équipement utilisateur, UE, standard.

12. Procédé selon l'une des revendications 1 à 11, dans lequel les attributs spécifiques de l'utilisateur comprennent en outre une catégorie de priorité eMLPP, la catégorie de priorité eMLPP et l'ARP étant multipliées par des facteurs de pondération et les attributs de service comportant une TC ou une THP, la TC ou la THP étant multipliées par un facteur de pondération.

13. Procédé selon la revendication 12, dans lequel chaque facteur de pondération est compris entre 0 et 1 et la somme de tous les facteurs de pondération est égale à 1.

14. Système de communication mobile comprenant une pluralité d'équipements utilisateurs, UE (User Equipments), et un planificateur (205) adapté pour exécuter le procédé selon l'une des revendications 1 à 13, le planificateur comprenant un contrôleur de réseau de radiocommunication, RNC (Radio Network Controller), une unité de contrôle de paquets, PCU (Packet Control Unit), ou un nœud B évolué, eNodeB (evolved Node B).
